(19) **Europäisches Patentamt**

**European Patent Office**

**Office européen des brevets**

(11) **EP 1 359 400 B1**

(12) **FASCICULE DE BREVET EUROPEEN**

(45) Date de publication et mention
de la délivrance du brevet:
**29.12.2004 Bulletin 2004/53**

(51) Int Cl.⁷: **G01J 5/20**, G01J 5/34

(21) Numéro de dépôt: **03101152.1**

(22) Date de dépôt: **25.04.2003**

(54) **Dispositif de détection thermique de rayonnement à nombre de points d'ancrage réduit**

Thermische Strahlungsdetektionsvorrichtung mit beschränkter Anzahl von Befestigungspunkten

Thermal radiation detecting device with a reduced number of anchoring points

(84) Etats contractants désignés:
**AT BE BG CH CY CZ DE DK EE ES FI FR GB GR
HU IE IT LI LU MC NL PT RO SE SI SK TR**

(30) Priorité: **29.04.2002 FR 0205367**

(43) Date de publication de la demande:
**05.11.2003 Bulletin 2003/45**

(73) Titulaire: **COMMISSARIAT A L'ENERGIE
ATOMIQUE
75752 Paris Cedex 15 (FR)**

(72) Inventeurs:
• **YON, Jean-Jacques
38360 Sassenage (FR)**
• **PEREZ, André
38710 Cordeac (FR)**

(74) Mandataire: **Poulin, Gérard
Société BREVATOME
3, rue du Docteur Lancereaux
75008 Paris (FR)**

(56) Documents cités:
**FR-A- 2 802 338**

## Description

## DOMAINE TECHNIQUE

La présente invention concerne un dispositif de détection thermique de rayonnement à nombre de points d'ancrage réduit. Elle se rapporte en particulier au domaine des détecteurs de rayonnement infrarouge, et plus précisément aux détecteurs à effet thermique qui présentent l'avantage de pouvoir fonctionner à la température ambiante.

## ETAT DE LA TECHNIQUE ANTERIEURE

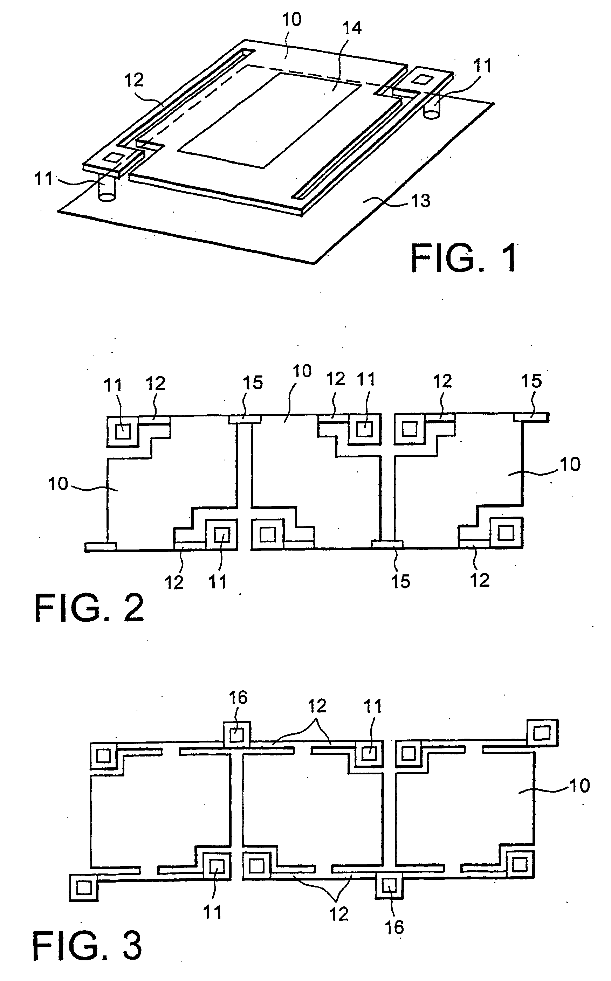

La figure 1 représente une vue simplifiée d'un détecteur de rayonnements électromagnétiques de l'art connu basé sur le principe de la détection thermique. Schématiquement, ce type de détecteur comprend une fine membrane absorbante vis-à-vis du rayonnement électromagnétique incident, suspendue au-dessus d'un substrat de support 13. Cette membrane 10 est fixée au substrat 13 par l'intermédiaire de points d'ancrage 11. Sous l'effet du rayonnement, cette membrane 10 s'échauffe et transmet sa température à une couche, généralement mince 14, qui est déposée sur celle-ci et qui joue un rôle de thermomètre. Différents types de thermomètres peuvent être envisagés, et notamment un thermistor.

Le substrat 13 peut être constitué d'un circuit électronique intégré sur une plaquette de silicium comprenant, d'une part, des dispositifs de stimuli et de lecture du thermomètre et, d'autre part, les composants de multiplexage qui permettent de mettre en série les signaux issus de différents thermomètres et de les transmettre vers un nombre réduit de sorties exploitables par un système d'imagerie usuel.

La sensibilité d'un tel détecteur thermique peut être améliorée en disposant entre la membrane absorbante 10 et le substrat 13 un dispositif d'isolation thermique 12 qui permet de limiter les pertes thermiques de cette membrane 10 et par voie de conséquence, de préserver son échauffement.

Les dispositifs d'isolation thermique usuels les plus performants présentent un facteur de forme caractéristique où la longueur est maximisée tandis que la section (produit de la largeur par l'épaisseur) est minimisée. Ces dispositifs 12 peuvent être oblongs. Outre leur rôle d'isolation thermique, de tels dispositifs oblongs 12 réalisent par ailleurs la suspension de la membrane 10 et son maintien mécanique au-dessus du substrat 13.

Certains de ces éléments peuvent, de plus, supporter une couche conductrice d'électricité qui relie les électrodes du thermomètre aux entrées d'un circuit de traitement qui est localisé soit sur le substrat 13 dans le cas d'une lecture intégrée, soit sur une carte d'électronique périphérique.

Ces éléments 12, dénommés "dispositifs de suspension" dans la suite, peuvent donc jouer un triple rôle : celui d'isolation thermique, celui de suspension de la membrane 10 et enfin celui d'interconnexion électrique.

Une analyse simplifiée de l'échauffement $\Delta T$ de la membrane absorbante 10 sous l'effet de la puissance de l'onde incidente $P_i$ peut être réalisée a priori, sans hypothèse particulière sur la nature et les caractéristiques du thermomètre. Le formalisme qui traduit cet échauffement est donné par la relation $\Delta T = \varepsilon . \frac{P_i}{G_{TH}}$, où $\varepsilon$ représente la fraction de l'onde incidente effectivement absorbée par la membrane 10 et où $G_{TH}$ représente la conductance thermique des dispositifs de suspension 12. L'expression de $G_{TH}$ est donnée par l'équation suivante : $\frac{1}{G_{TH}} = \frac{1}{\sigma_{th}} . \frac{L}{W.ep}$, où $\sigma_{th}$ représente la conductivité thermique des matériaux constituant les dispositifs de suspension 12 et où L, W et ep représentent respectivement la longueur, la largeur et l'épaisseur de ces dispositifs.

A la lumière de ces données, il apparaît que l'amélioration de la sensibilité de tels détecteurs nécessite, pour une puissance incidente donnée, de maximiser l'échauffement $\Delta T$ de la membrane absorbante 10, ce qui peut être réalisé en réduisant la conductance thermique $G_{TH}$, c'est-à-dire en maximisant L et en minimisant le produit W.ep, c'est-à-dire la section des dispositifs de suspension 12.

Les avancées techniques récentes dans le domaine de la micro-électronique du silicium ont donné un nouvel essor à cette technologie de détecteurs.

En effet, la microélectronique du silicium développe des techniques de réalisation de couches minces et des méthodes de miniaturisation de structures par photolithographie qui peuvent être mises à profit pour élaborer des dispositifs de suspension qui répondent aux critères d'optimisation définis ci-dessus et qui permettent donc d'envisager des détecteurs hautement performants.

Par ailleurs, la micro-électronique du silicium repose sur des procédés collectifs, réalisés au niveau de la plaquette de silicium, dont peuvent aussi profiter les détecteurs thermiques. De tels procédés ouvrent, en effet, la possibilité de réaliser des matrices de détecteurs de grande complexité : typiquement des matrices de 320x240 détecteurs sont représentatives de l'état de l'art. Ils permettent aussi de réaliser collectivement un grand nombre de matrices sur une plaquette de silicium et donc de réduire en conséquence le coût de fabrication unitaire de tels composants. Cette propriété, associée au fait que les détecteurs thermiques peuvent fonctionner à température ambiante et s'affranchir de tout système de refroidissement font que cette technologie est particulièrement bien adaptée à la réalisation de systèmes d'imagerie infrarouge faible coût. Cependant, les exigences des marchés de grande diffusion, automobile par exemple, imposent d'étendre cette démarche de réduction des coûts.

Dans cette optique, la diminution de la taille de chacun de ces détecteurs constitue une voie d'amélioration capitale. Elle permet d'envisager des facteurs importants de réduction des coûts dans la mesure où les dimensions de chaque détecteur ont des conséquences directes sur la taille et donc sur le coût de la caméra, de l'optique (particulièrement onéreuse dans la gamme infrarouge), de la puce de détection et de son empaquetage.

La réduction de la taille de ces détecteurs entraîne cependant un certain nombre de conséquences techniques néfastes. Parmi celles-ci, la conséquence la plus lourde est sans aucun doute la dégradation des performances électro-optiques. Une solution connue qui permet de limiter cette diminution des performances consiste à diminuer la section des dispositifs de suspension 12 des détecteurs. Une telle solution permet d'améliorer leur isolation thermique et par voie de conséquence leur sensibilité. L'utilisation de procédés photo-lithographiques adéquats ainsi que le développement de procédés de dépôts de couches très minces permet d'obtenir un tel résultat.

Mais cet exercice de réduction de la section des dispositifs de suspension est limité par la tenue mécanique des membranes suspendues qui va avoir tendance à diminuer au fur et à mesure que l'on réduit ladite section.

La structure telle qu'illustrée sur la figure 1 et telle que décrite dans le document référencé [1] en fin de description, qui comprend une membrane absorbante 10 maintenue par deux dispositifs de suspension oblongs 12 rattachés à deux points d'ancrage 11 qui assurent également l'interconnexion électrique entre la membrane et le substrat sous-jacent, est mal adaptée à une telle opération de réduction de la section des dispositifs de suspension. En effet, cette opération se traduit par un fléchissement de ces dispositifs 12, qui peut entraîner un basculement de la membrane absorbante 10 jusqu'au contact avec le substrat 13, court-circuitant à cette occasion l'isolation thermique des dispositifs de suspension 12.

Une première solution permettant de remédier à cette difficulté est décrite dans le document référencé [2]. Selon cette solution qui est représentée sur la figure 2, le basculement des membranes suspendues est empêché par l'adjonction d'une connexion mécanique 15 qui relie entre elles deux membranes adjacentes 10. L'inconvénient de cette solution réside dans le couplage thermique que la connexion mécanique introduit entre ces deux détecteurs adjacents, qui va conduire à une dégradation de la résolution spatiale du composant.

Une deuxième solution, décrite dans le document référencé [3], consiste à disposer des éléments de support supplémentaires 16, localisés aux coins du détecteur, qui sont opposés aux points d'ancrage usuels 11. La figure 3 représente trois détecteurs matricés selon cette structure qui se caractérise par :

- deux points d'ancrage 11 qui assurent les fonctions de maintien mécanique et de connexion électrique, pour chaque détecteur,
- deux éléments de support supplémentaires 16, qui n'ont qu'un rôle mécanique et qui peuvent avantageusement être communs à quatre détecteurs adjacents, et qui sont assimilables à des points d'ancrage.

Par construction, les points d'ancrage 11 et les éléments de support supplémentaires 16 sont situés en aval des dispositifs de suspension 12. Ils sont donc isothermes du substrat 13. De plus, ils sont généralement non absorbants vis-à-vis du rayonnement. Du point de vue de la capacité de détection, ces éléments peuvent être assimilés à des éléments perturbateurs que l'on cherche donc à minimiser. Cette seconde solution présente donc l'inconvénient de contenir un nombre important de tels éléments 11 et 16 : leur décompte au prorata des détecteurs qui les partagent est de 2,5 points d'ancrage par détecteur.

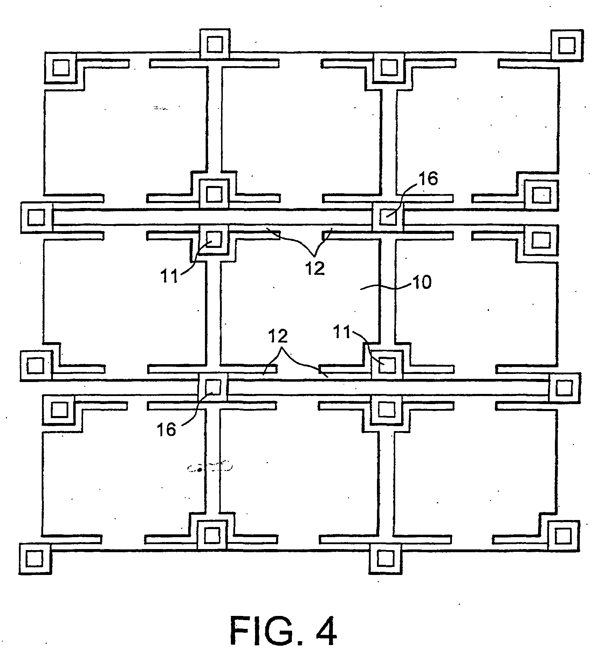

Le nombre de tels points d'ancrage peut être réduit grâce au concept exposé dans le document référencé [4]. Ce document décrit un moyen d'adressage et de multiplexage particulier des détecteurs qui permet d'utiliser des moyens d'interconnexion communs à deux détecteurs adjacents, situés par exemple sur une même ligne. L'association d'un tel concept avec des éléments de support supplémentaires, tels que ceux présentés dans le document référencé [3], permet d'aboutir à une solution plus performante d'un point de vue optique et qui conserve de bonnes propriétés de stabilité mécanique. Cette solution est représentée figure 4, qui montre une partie de matrice constituée de 3x3 détecteurs. Chaque détecteur est constitué d'une membrane absorbante 10 maintenue par quatre dispositifs de suspension 12, reliés chacun à un point d'ancrage 11 particulier. Parmi ces quatre points d'ancrage 11, deux d'entre eux, qualifiés de "points d'ancrage électriques" 11, outre leur fonction de maintien mécanique, sont utilisés pour interconnecter électriquement le détecteur. Les deux autres points d'ancrage, qualifiées de "points d'ancrage mécaniques" 16, ont un rôle purement mécanique. La structure de la figure 4 se caractérise par 1,5 points d'ancrage par détecteur. Cette solution, bien que plus performante que la précédente, entraîne toutefois un certain nombre d'inconvénients :

- elle comporte un résidu de points d'ancrage purement mécaniques qui n'ont aucun rôle fonctionnel de détection. Le facteur de remplissage, c'est-à-dire la fraction de la surface du détecteur qui participe effectivement à la détection, s'en trouve diminué d'autant.
- elle se caractérise par une topographie particulière qui conduit à juxtaposer les points d'ancrage électriques deux par deux. Cette proximité complique les procédés technologiques de photolithographie et de gravure, qui définissent lesdits points d'ancrage. Cet inconvénient doit être pallié soit par des règles de dessins relâchées qui vont limiter la performance du détecteur, soit par des équipements de technologie mieux résolus et donc plus coûteux. Cet inconvénient est d'autant plus critique que la taille et le pas des détecteurs sont diminués.

L'invention a pour objectif de proposer une structure de détecteurs thermiques de rayonnement, capable de remédier aux déformations mécaniques qui accompagnent généralement la réduction de la section des dispositifs de suspension et d'isolation thermique des membranes suspendues, tout en conservant une très grande capacité de détection.

## EXPOSÉ DE L'INVENTION

L'invention concerne un dispositif de détection thermique de rayonnement comportant au moins deux détecteurs comportant chacun une membrane absorbante du rayonnement, maintenue par au moins deux dispositifs de suspension reliés respectivement à un point d'ancrage mécanique et à un point d'ancrage électrique, caractérisé en ce qu'au moins un point d'ancrage, qui est un point d'ancrage commun à deux détecteurs voisins, est un point d'ancrage uniquement mécanique pour un détecteur et un point d'ancrage au moins électrique pour le détecteur voisin.

Dans un mode de réalisation avantageux, chaque point d'ancrage est partagé entre quatre détecteurs. Au moins un détecteur central, c'est-à-dire un détecteur qui est entouré de détecteurs voisins dans toutes les directions, est relié à quatre points d'ancrage via respectivement quatre dispositifs de suspension. Chacun de ces quatre points d'ancrage, qui est commun à quatre détecteurs adjacents, cumule les fonctions de maintien mécanique et d'interconnexion électrique. Deux premiers points d'ancrage assurent les connexions électriques du détecteur central et en partie celles des deux détecteurs voisins situés sur la même ligne, tandis que deux autres points d'ancrage assurent une partie des connexions électriques des deux détecteurs voisins situés dans la même colonne respectivement sur la ligne supérieure et sur la ligne inférieure.

L'invention permet d'obtenir les résultats avantageux suivants :

- le fait de disposer de quatre points d'ancrage par détecteur permet d'assurer une stabilité mécanique renforcée qui autorise une réalisation de dispositifs de suspension et d'isolation thermique de section réduite, qui est favorable en terme de sensibilité thermique et donc de performance ;
- le fait de disposer de points d'ancrage qui soient communs à quatre détecteurs adjacents permet de maximiser le facteur de remplissage du détecteur et donc sa performance ;
- le fait que tous les points d'ancrage cumulent les fonctions de maintien mécanique et de connexion électrique permet de s'affranchir des points d'ancrage spécifiquement disposés à des fins de tenue mécanique, qui perturbent la qualité de la détection ; en d'autres termes, tous les points d'ancrage selon l'invention ont un rôle fonctionnel du point de vue de la fonction de détection électro-optique ;

- la topographie de cet arrangement permet de séparer largement les différents points d'ancrage les uns des autres. Cette propriété simplifie les procédés technologiques de photolithographie et de gravure qui définissent lesdits points d'ancrage. Il en découle des règles de dessins relatives à la séparation de ces éléments qui ne nécessitent pas d'être réduites proportionnellement à la taille du détecteur ; la réalisation des détecteurs à pas réduit réalisés selon cette configuration est facilitée et peut être traitée par des moyens technologiques moins performants et donc moins coûteux que ceux nécessaires à la réalisation de structures relevant de l'art antérieur.

## BRÈVE DESCRIPTION DES DESSINS

Les figures 1 à 4 illustrent différents dispositifs de détection de l'art connu.
La figure 5 illustre le dispositif de détection thermique de l'invention.

## EXPOSE DETAILLE DE MODES DE REALISATION

Le dispositif de détection thermique de rayonnement selon l'invention comprend des points d'ancrage communs à plusieurs détecteurs ayant, contrairement aux solutions de l'art antérieur décrites ci-dessus, des fonctions différentes pour deux détecteurs voisins : c'est-à-dire une fonction uniquement de maintien mécanique pour un premier détecteur, et au moins une fonction de connexion électrique pour un second détecteur.

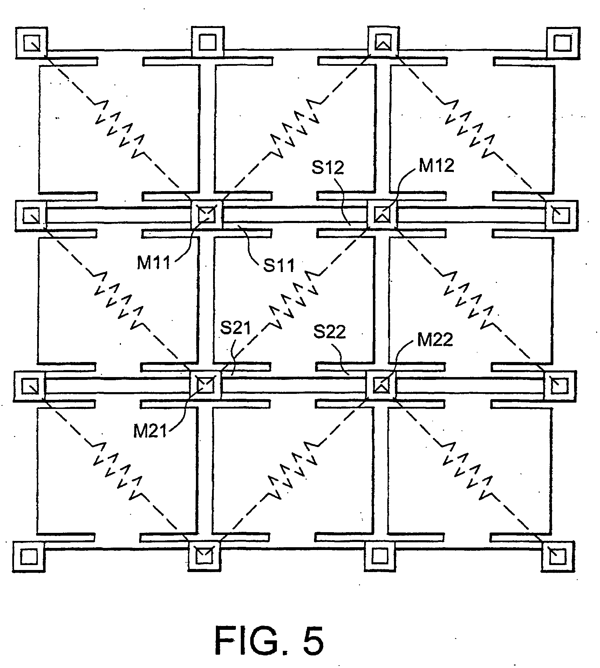

Une partie de matrice de 3x3 détecteurs thermiques de rayonnement ainsi réalisés est illustrée sur la figure 5.

Chaque détecteur est constitué d'une membrane absorbante maintenue par au moins deux dispositifs de suspension reliés à au moins deux points d'ancrage remplissant chacun un double rôle, premièrement une fonction de maintien mécanique de la membrane suspendue, deuxièmement une fonction d'interconnexion électrique qui permet de mesurer le signal du détecteur. De plus, cette membrane est soutenue par deux autres points d'ancrage remplissant une fonction uniquement de maintien mécanique de la membrane et une fonction de maintien mécanique et d'interconnexion électrique pour des détecteurs voisins de ce détecteur.

Le flux de courant circulant dans chacun des détecteurs est schématisé par le symbole électrique de la résistance qui permet de préciser, par la même occasion, quels sont les points d'interconnexion électrique de chacun de ces détecteurs.

Comme illustré sur cette figure 5, le détecteur central, c'est-à-dire un détecteur qui est entouré de détecteurs voisins dans toutes les directions, est relié à quatre points d'ancrage référencés M11, M12, M21 et M22 via respectivement quatre dispositifs de suspension S11, S12, S21 et S22. Chacun de ces quatre points d'ancrage, qui est commun à quatre détecteurs adjacents, cumule les fonctions de maintien mécanique et d'interconnexion électrique. Les points d'ancrage M12 et M21 assurent les connexions électriques du détecteur central et en partie celles des deux détecteurs voisins situés sur la même ligne, tandis que les points d'ancrage M11 et M22 assurent une partie des connexions électriques des deux détecteurs voisins situés dans la même colonne respectivement sur la ligne supérieure et sur la ligne inférieure et assurent une fonction uniquement de maintien mécanique pour le détecteur central. Il est entendu que le rôle des lignes et des colonnes peut être inversé sans sortir du cadre de l'invention.

Selon l'architecture proposée, le décompte des points d'ancrage au prorata des détecteurs qui les partagent est de un point d'ancrage par détecteur, soit un gain de 0,5 relativement à l'art antérieur.

**REFERENCES**

[**1**] FR 96 10005

[**2**] FR-A-2 788 885

[**3**] "Amorphous silicon based uncoaled microbolometer IRFPA" de Corinne Vedel (5-9 avril 1999, Orlando, USA, Conférence SPIE, volume 3698)

[**4**] FR-A-2 802 338

**Revendications**

1. Dispositif de détection thermique de rayonnement comportant au moins deux détecteurs comportant chacun une membrane absorbante (10) du rayonnement, maintenue par au moins deux dispositifs de suspension (S11, S12, S21, S22) reliés respectivement à un point d'ancrage mécanique et à un point d'ancrage électrique, **caractérisé en ce qu'**au moins un point d'ancrage qui est un point d'ancrage commun à deux détecteurs voisins, est un point d'ancrage uniquement mécanique pour un détecteur et un point d'ancrage au moins électrique pour le détecteur voisin.

2. Dispositif selon la revendication 1, dans lequel chaque point d'ancrage est partagé entre quatre détecteurs.

3. Dispositif selon la revendication 2, comportant au moins un détecteur central relié à quatre points d'ancrage (M11, M12, M21, M22) via respectivement quatre dispositifs de suspension (S11, S12, S21, S22), chacun de ces points d'ancrage cumulant des fonctions de maintien mécanique et d'interconnexions électriques.

4. Dispositif selon la revendication 3, dans lequel deux premiers points d'ancrage (M12, M21) assurent les connexions électriques dudit détecteur central et en partie celles des deux détecteurs voisins situés sur une même ligne.

5. Dispositif selon la revendication 4, dans lequel deux autres points d'ancrage (M11, M22) assurent une partie des connexions électriques de deux détecteurs voisins situés dans une même colonne respectivement sur une ligne supérieure et sur une ligne inférieure.

**Claims**

1. Thermal radiation detection device comprising at least two detectors each comprising an absorbent radiation membrane (10) held in place by at least two suspension devices (S11, S12, S21, S22) connected to a mechanical anchor point and an electrical anchor point respectively, **characterized in that** at least one anchor point, which is an anchor point common to two adjacent detectors, is a purely mechanical anchor point for one detector and is at least an electric anchor point for the adjacent detector.

2. Device according to claim 1, in which each anchor point is shared between four detectors.

3. Device according to claim 2, comprising at least one central detector connected to four anchor points (M11, M12, M21, M22) through four suspension devices (S11, S12, S21, S22) respectively, each of these four anchor points comprising the mechanical support and electrical interconnection functions.

4. Device according to claim 3, in which two first anchor points (M12, M21) provide electrical connections for the said central detector and part of the electrical connections for the two adjacent detectors located on the same line.

5. Device according to claim 4, in which two other anchor points (M11, M22) form part of the electrical connections of two adjacent detectors located in the same column on the upper line and lower line respectively.

**Patentansprüche**

1. Thermische Strahlungsdetektionsvorrichtung mit wenigstens zwei Detektoren, von denen jeder eine Strahlungsabsorptionsmembran (10) umfasst, gehalten durch wenigstens zwei Aufhängungseinrichtungen (S11, S12, S21, S22), jeweils verbunden mit einem mechanischen Verankerungspunkt und einem elektrischen Verankerungspunkt, **dadurch gekennzeichnet, dass** wenigstens ein Verankerungspunkt, der ein gemeinsamer Verankerungspunkt zweier benachbarter Detektoren ist, für einen Detektor nur ein mechanischer Verankerungspunkt ist und für den benachbarten Detektor wenigstens ein elektrischer Verankerungspunkt ist.

2. Vorrichtung nach Anspruch 1, bei der sich jeden Verankerungspunkt jeweils vier Detektoren teilen.

3. Vorrichtung nach Anspruch 2 mit wenigstens einem durch jeweils vier Aufhängungseinrichtungen (S11, S12, S21, S22) mit vier Verankerungspunkten (M11, M12, M21, M22) verbundenen zentralen Detektor, wobei jeder dieser Verankerungspunkte die Funktionen des mechanischen Halts und der elektrischen Zwischenverbindungen in sich vereinigt.

4. Vorrichtung nach Anspruch 3, bei der zwei erste Verankerungspunkte (M12, M21) die elektrischen Verbindungen des genannten zentralen Detektors und teilweise diejenigen der beiden in einer selben Zeile befindlichen benachbarten Detektoren gewährleisten.

5. Vorrichtung nach Anspruch 4, bei der zwei andere Verankerungspunkte (M11, M22) einen Teil der elektrischen Verbindungen zweier benachbarter Detektoren gewährleisten, die sich in ein und derselben Spalte jeweils in einer darüberliegenden Zeile und in einer darunterliegenden Zeile befinden.

FIG. 1

FIG. 2

FIG. 3

# FIG. 4

# FIG. 5